# EUROPÄISCHE PATENTSCHRIFT

(11) **EP 1 457 373 B1**
(45) Veröffentlichungstag und Bekanntmachung des Hinweises auf die Patenterteilung: **23.09.2009**
(21) Anmeldenummer: 04100014.2
(22) Anmeldetag: 06.01.2004
(51) Int. Cl.: B60J 5/10, B60J 10/08

(54) **Hecktüre für ein Fahrzeug**
Liftgate for a vehicle
Hayon arrière pour un véhicule

(30) Priorität: 13.03.2003 EP 03100638
(43) Veröffentlichungstag der Anmeldung: 15.09.2004
(73) Patentinhaber: Ford Global Technologies, LLC, A subsidary of Ford Motor Company, Dearborn, MI 48126 (US)
(72) Erfinder: Kueppers, Rolf, 50739, Koeln (DE); Matheis, Anton, 51467, Bergisch Gladbach (DE)
(74) Vertreter: Drömer, Hans-Carsten

(56) Entgegenhaltungen:
- DE-A- 4 400 374
- DE-U- 9 310 058
- FR-A- 2 733 722
- US-A- 3 612 601
- US-A- 4 413 854

## Beschreibung

Die Erfindung betrifft eine Hecktür für ein Fahrzeug, welche um eine an der Karosserie des Fahrzeugs fest angebrachte obere Achse schwenkbar ist und ein oberes und ein unteres Türteil aufweist, von denen mindestens ein Türteil unabhängig von dem anderen Türteil oder der Hecktür insgesamt zu öffnen ist, wobei die Hecktür einen die Türteile aufnehmenden Rahmen mit oberen, unteren und seitlichen Holmen aufweist, der obere Holm mit der fest angebrachten Achse verbunden und um diese in eine Offen-Position des Rahmens schwenkbar ist und der untere Holm eine Einrichtung zum Verriegeln der Hecktür an der Karosserie aufweist. Eine Hecktür dieser Art ist aus der FR 2 733 722 A bekannt.

Aus dem Stand der Technik sind weitere verschiedene Ausführungsformen von Hecktüren für ein Kraftfahrzeug bekannt. Aus der DE 44 00 374 A1 ist zunächst eine Hecktüre für ein Kraftfahrzeug bekannt, bei der die Heckklappe aus einem unteren Klappenteil und einem oberen Klappenteil besteht. Dabei sind beide Klappenteile durch eine Achse dergestalt miteinander verbunden, daß zum ausschließlichen Öffnen eines Kofferraumes ausschließlich das untere Klappenteil durch Verschwenken um die Achse geöffnet werden kann. Beim Öffnen der gesamten Heckklappe schwenkt diese um eine obere Achse. Zwei Gewichtsausgleichsvorrichtungen oder Dämpferstützen auf jeder Klappenseite kompensieren in Verbindung mit zwei auf der ersten Achse schwenkbar angeordneten Winkelhebeln das Gewicht der beiden Klappenteile.

Die Druckschrift US 4,688,844 offenbart weiterhin eine Fahrzeuganordnung, die sich zumindest teilweise abwärts über einen Endteil eines Fahrgastabteils und über einen Kofferraum erstreckt und eine anhebbare Türanordnung, mit zwei Türabschnitten umfaßt, von denen ein oberer Abschnitt über Scharniereinrichtungen an einer oberen Kante der Karosserie schwenkbar angebracht ist und ein Rückfenster umfaßt und ein unterer, den Kofferraumdeckel bildender Abschnitt an seiner oberen Kante über Scharniereinrichtungen an der unteren Kante des oberen Abschnitts schwenkbar angebracht ist und an seiner unteren Kante eine Verriegelungseinrichtung um den Kofferraumdeckel an der Karosserie lösbar zu verriegeln, und eine Entriegelungseinrichtung umfaßt, die an dem unteren Abschnitt schwenkbar angebracht ist, um die Verriegelungseinrichtung zu lösen und es somit für den oberen Abschnitt möglich zu machen, diesen in dessen offene Stellung mit dem unteren Abschnitt relativ zu dem oberen Abschnitt verriegelt anzuheben, um einen gleichzeitigen Zugang sowohl zu dem Fahrgastabteil, als auch zu dem Kofferraum vorzusehen. Es ist dabei eine zweite Verriegelungseinrichtung zwischen den zwei Abschnitten vorgesehen, um diese lösbar miteinander zu verriegeln und eine zweite Entriegelungseinrichtung an dem unteren Abschnitt schwenkbar angebracht und mit der ersten und der zweiten Verriegelungseinrichtung über ein Kupplungsglied verbunden, um diese gleichzeitig zu lösen, so daß der untere Abschnitt unabhängig von dem oberen Abschnitt geöffnet werden kann und dadurch Zugang nur zu dem Kofferraum gewährt.

Außerdem ist aus der Praxis bei Fahrzeugen mit Steilheck und Hecktür bekannt, daß der ein Heckfenster bildende obere Türteil als Teil der Hecktür separat durch Aufschwenken des Heckfensters aus der Hecktür zu öffnen ist, um beispielsweise auf die Hintersitze oder eine Hutablage von außen zugreifen zu können.

Eine modifizierte Anordnung einer Hecktüre für ein Kraftfahrzeug ist aus der US 4,413,854 A bekannt. Die in dieser Druckschrift beschriebene Lehre umfaßt dabei auch, daß die Heckpartie der Karosserie für eine Hecktür-Öffnung einen einen Teil der Karosserie bildenden, stabilen Rahmen aufweist, in den die beiden Klappenteile dichtend aufgenommen werden. Die hier beschriebene Anordnung bezieht sich konkret auf eine mehrteilige Hecktüren- Konstruktion für den Kofferraum eines Fließheckfahrzeuges. Die Kofferraumöffnung wird dabei durch eine gelenkige, zweiteilige Hecktüre abgedeckt. Der rückwärtige Teil der Hecktüre kann dabei unabhängig von deren vorderen Teil geöffnet werden, um den rückwärtigen Bereich des Kofferraumes zugänglich zu machen. Alternativ dazu kann die gesamte Hecktüre zur Freigabe des gesamten Kofferraumbodens geöffnet werden.

Die mehrteilige Hecktüren- Konstruktion für den Kofferraum eines Fließheckfahrzeuges ist vorgesehen für eine nach oben gerichtete Kofferraumöffnung in der Karosserie eines Fahrzeuges und umfaßt einen vorderen Kofferraumbodenteil, der den vorderen Bereich des Bodens des Kofferraumes definiert, und einen rückwärtigen Kofferraumbodenteil, der den rückwärtigen Bereich des Bodens des Kofferraumes definiert, der sich rückwärtig von dem hinteren Ende des vorderen Kofferraumbodenteiles erstreckt und durchgängig zu diesem verläuft. Die Konstruktion umfaßt weiter eine Hecktüre zur Abdeckung der genannten Kofferraumöffnung mit einem vorderen Deckelteil, der den größten Bereich des vorderen Kofferraumbodenteiles abdeckt, und einen hinteren Deckelteil, der den rückwärtigen Kofferraumbodenteil abdeckt, wobei das hintere Deckelteil an der Verbindungslinie zwischen vorderem und hinterem Kofferraumbodenteil gelenkig an der Hecktüre angeordnet ist. Es ist weiterhin die Hecktüre an ihrem vorderen Bereich schwenkbar an dem hinteren Teil der Fahrzeugkarosserie entlang der Vorderkante der Kofferraumöffnung gelagert, wobei der hintere Deckelteil unabhängig vom dem vorderen Deckelteil betätigbar ist, um so einen Zugang zu dem rückwärtigen Kofferraumbodenteil bereitzustellen, und wobei außerdem die gesamte Hecktüre derart betätigbar ist, um einen gleichzeitigen Zugang zu dem vorderen und hinteren Kofferraumbodenteil bereitzustellen. Es ist dabei bei einer Ausführungsform vorgesehen, daß die Hecktüre und der hintere Deckelteil nachgiebig in ihren aufgeschwenkten, geöffneten Positionen gehalten werden. Es ist weiterhin vorgesehen, daß die Hecktüre an ihrem vorderen Bereich über einen Rahmen schwenkbar an dem hinteren Teil der Fahrzeugkarosserie entlang der Vorderkante der Kofferraumöffnung gelagert ist, es werden dabei der vordere und der hintere Deckelteil dichtend über an sich bekannte Dichtelemente wie Dichtungsstreifen od. dgl. in diesem Rahmen aufgenommen.

Das bei dieser Anordnung zugrundeliegende Problem ist, daß bei zuvor bekannten Hecktüren- Konstruktionen für den Kofferraum eines Fließheckfahrzeuges insb. nachteilig ist, daß die gesamte schwergewichtige Hecktüre für einen Zugang zu dem Kofferraum hochgeschwenkt werden muß, auch dann, wenn nur eine kleine Gepäckmenge wie z.B. kleine Taschen oder kleine Gegenstände, Regenschirme, Bekleidung od.dgl. in den Kofferraum gelegt werden sollen. Ein weiterer Nachteil dieser bekannten Hecktüren besteht darin, daß bei schlechtem Wetter der Kofferraum und dessen Inhalt immer dann z.B. dem Regen, Schnee od. dgl. ausgesetzt ist, wenn die Hecktüre geöffnet ist. Weiterhin werden die in dem Fahrzeug befindlichen Personen ebenfalls von diesen äußeren Einflüssen gestört. Diese Nachteile sollen mit der zuvor beschriebenen Anordnung vermieden werden. Es wird dabei in der beschriebenen Weise mit dieser Anordnung erreicht, daß der hintere Deckelteil unabhängig vom dem vorderen Deckelteil geöffnet werden kann, um so einen Zugang nur zu dem rückwärtigen Kofferraumbodenteil bereitzustellen, und daß außerdem die gesamte Hecktüre derart betätigbar ist, um einen gleichzeitigen Zugang zu dem vorderen und hinteren Kofferraumbodenteil bereitzustellen. Weiterhin soll die beschriebene Anordnung einfach im Aufbau und im Design sowie funktionssicher sein.

Bei der beschriebenen Anordnung ist außerdem vorgesehen, daß die Hecktüre mit Verriegelungselementen versehen ist, die dazu geeignet sind, entweder alleine den hinteren Deckelteil in seine geöffnete Position zu überführen oder alternativ dazu die gesamte Hecktüre in die geöffnete Position zu überführen. Wenn die Hecktüre nach oben verschwenkt wird, können die Verriegelungselemente dazu verwendet werden, um den hinteren Deckelteil gegenüber dem vorderen Deckelteil zu verriegeln. Bei einer Ausführungsform kann der vordere Deckelteil mit einem Rückfenster versehen sein, der hintere Deckelteil kann dabei in seinem hinteren Endbereich nahezu vertikal abgebogen ausgebildet sein. Die Hecktüre kann wie erwähnt bevorzugt mit einem festen Rahmen versehen sein, der z.B. aus Metall oder Glasfasermaterial bestehen kann. Der obere Bereich des Rahmens ist dabei mit einer das Rückfenster aufnehmenden Öffnung versehen. Der untere Bereich des Rahmens dient demgegenüber zur Aufnahme des hinteren Deckelteiles.

Bei der in der US 4 413 854 A beschriebenen Anordnung ist also eine funktionsgerechte Möglichkeit zur unabhängigen Betätigung des hinteren Deckelteiles i.B.a. das vordere Deckelteil z.B. unter Verwendung einer Rahmenstruktur einerseits erreicht, um so einen Zugang zu dem rückwärtigen Kofferraumbodenteil bereitzustellen, und andererseits die Möglichkeit, die gesamte Hecktüre derart zu betätigen, daß ein gleichzeitiger Zugang zu dem vorderen und hinteren Kofferraumbodenteil bereitgestellt wird. Verbesserungswürdig ist bei dieser Anordnung allerdings insb. die Anordnung und Ausbildung der hier unterbrochen ausgebildeten Dichtungselemente, so bestehen insb. an den Verbindungsstellen der unterschiedlichen Profile und Dichtungselemente Schwierigkeiten mit der Abdichtung z.B. für ein funktionsgerechtes Ablaufen von in diesem Bereich anfallendem Regenwasser.

Eine vergleichbare Anordnung ist auch aus der DE 196 15 540 A1 bekannt. Diese Druckschrift bezieht sich auf einen Personenkraftwagen mit wenigstens einem in einem Karosserieausschnitt schwenkbar gelagerten Karosserieteil, insb. einer Heckklappe, in der wenigstens ein um eine karosserieteilfeste Schwenkachse gelagertes Klappenelement integriert ist. Es ist dabei das Karosserieteil aus einem starren, an die Abmessungen des Karosserieausschnittes angepaßten und an diesem schwenkbar gelagerten Rahmen sowie aus wenigstens zwei in diesem Rahmen schwenkbar gelagerten Klappenelementen aufgebaut, die gemeinsam die Karosserieteilfläche bilden. Es sind dabei in bevorzugter Ausgestaltung die beiden Klappenelemente an einem oberen Randbereich des Rahmens einerseits und an einem unteren Randbereich des Rahmens andererseits um jeweils zueinander parallele Schwenkachsen gegensinnig zueinander schwenkbar gelagert. Dabei kann das obere Klappenelement mit einer Fensterscheibe versehen sein, weiterhin kann das obere Klappenelement oder die Fensterscheibe in dem unteren Klappenelement versenkbar sein sowie das obere Klappenelement und/oder das untere Klappenelement lösbar mit dem Rahmen verbunden sein.

Mit einer derart ausgebildeten Anordnung soll bezüglich des wenigstens einen beweglich gelagerten Karosserieteiles eine Verbesserung der Anwendungs- und Einsatzmöglichkeiten gegenüber den zuvor bekannten Lösungen erzielt werden. Es ist dabei die beschriebene Anordnung besonders vorteilhaft als Heckklappe für einen Kombi- Personenkraftwagen oder für eine Großraumlimousine ausgebildet. Es soll aber auch möglich sein, als vorgesehene schwenkbar gelagerte Karosserieteile die Seitentüren eines Personenkraftwagens vorzusehen. Durch die beschriebene Ausbildung weist das schwenkbar gelagerte Karosserieteil, insb. in Form der Heckklappe mehrere funktionale Alternativen auf, die die Einsatz- und Anwendungsmöglichkeiten des Personenkraftwagens gegenüber den bekannten Lösungen verbessern sollen. Es ist dabei zum einen möglich, die beiden an dem Rahmen gelagerten Klappenelemente geschlossen zu halten und den Rahmen einschließlich der Klappenelemente entsprechend der bekannten Heckklappenfunktion zu öffnen. Dadurch sei der gesamte Karosserieheckausschnitt ausnützbar, um den Laderaum des Personenkraftwagens zu be- und zu entladen. Bei geschlossener Heckklappe, d.h. bei in dem Karosserieheckausschnitt verriegeltem Rahmen ist es zum anderen möglich, entweder eines der beiden Klappenelemente separat zu öffnen oder beide Klappenelemente gleichzeitig zu öffnen. Der verbleibende freie Heckausschnitt wird dann ausschließlich durch den Rahmen begrenzt.

Auch bei dieser Anordnung ist also eine funktionsgerechte Möglichkeit zur unabhängigen bzw. gleichzeitigen Betätigung der einzelnen Klappenelemente gegeben, d.h. die beschriebene Heckklappe weist mehrere funktionale Alternativen auf, verbesserungswürdig ist allerdings auch bei dieser Anordnung wiederum die hier nicht näher beschriebene Ausbildung der Dichtungselemente, um die oben beschriebenen Schwierigkeiten mit der Abdichtung bei unterbrochen ausgebildeten Dichtungselementen insb. an den Verbindungsstellen der unterschiedlichen Profile und Dichtungselemente zu vermeiden.

Weiterhin ist aus der US 3 612 601 A eine Heckklappenanordnung an der Karosserie eines Kombi- Fahrzeuges bekannt, bei der diese Heckklappenanordnung von einer die rückwärtige Zugangsöffnung des Fahrzeuges verschließenden geschlossenen Position in eine erste geöffnete Position als eine untere Klapptüre oder in eine zweite geöffnete Position als gesamte geöffnete Hecktüre bewegbar ist. Die Heckklappenanordnung umfaßt dabei ein Rahmenelement, das schwenkbar um eine horizontale Querachse an dem oberen Rand der rückwärtigen Zugangsöffnung gelagert ist, und ein Klappenelement, das schwenkbar relativ zu dem Rahmenelement um eine Achse desselben gelagert ist. In einer Position an dem Rahmenelement ist die besagte Achse, um die das Hecktürelement schwingt, in Querrichtung zu der Karosserie an dem unteren Rand der rückwärtigen Zugangsöffnung angeordnet, so daß die Schwenkbewegung des Klappenelementes relativ zu der Karosserie und dem Rahmenelement dem einer bekannten unteren Klapptüre entspricht, während das Klappenelement als eine Einheit mit dem Rahmenelement als gesamte Hecktüre schwenkbar ist, um die komplette rückwärtige Zugangsöffnung zugänglich zu machen.

Die hier beschriebene Heckklappenanordnung stellt also bereit ein Klappenelement, das in einem Klapptür- Modus bedienbar ist sowie auch als eine Einheit mit dem Rahmenelement in einem Hecktüröffnungs- Modus bewegbar ist, um die gesamte rückwärtige Zugangsöffnung zugänglich zu machen ohne eine Bewegungsfreiheit in dem unteren Bereich hinter dem Fahrzeug haben zu müssen. Es wird außerdem durch die schwenkbare Anordnung des Klappenelementes an dem Rahmenelement und durch die schwenkbare Anordnung des Rahmenelementes an der Fahrzeugkarosserie erreicht, daß das Klappenelement und das Rahmenelement als eine Einheit schwenkbar in einem Hecktüröffnungs- Modus um eine Querachse an dem oberen Rand der Karosserieöffnung ist von einer die Öffnung schließenden Position zu einer die Öffnung vollständig zugänglich machenden öffnenden Position, während außerdem das Klappenelement in einen Klapptür- Modus um die Achse des Rahmenelementes schwenkbar ist, und zwar ausgehend von der erwähnten geschlossenen Position, um um die rückwärtige Zugangsöffnung zugänglich zu machen und um eine horizontale Plattform an der Fahrzeugkarosserie zu definieren. Weiterhin werden an der Heckklappenanordnung Verschließelemente vorgesehen, die dazu dienen, das Klappenelement lösbar in einer fixierten Position in Bezug auf das Rahmenelement während des Hecktüröffnungs- Modus zu halten und gleichzeitig während des Klapptür- Modus das Rahmenelement in fester Position in Bezug auf die Fahrzeugkarosserie zu halten. Die Heckklappenanordnung umfaßt dabei bei einer Ausführungsform ein i.w. rechteckiges Rahmenelement mit oberen, unteren und seitlichen Rahmenteilelementen.

Wenn bei dieser Anordnung bei dem zeichnerisch dargestellten Ausführungsbeispiel die Heckklappenanordnung von der geschlossenen Position in den Klapptür- Modus überführt werden soll, wird die Fensterscheibe in die herunterbewegte Position überführt und dann der Betätigungshandgriff betätigt. Das Klappenelement wird dann nach außen um die Querachse des Rahmenelementes an dem unteren Rand der rückwärtigen Zugangsöffnung gegen die Kraft einer Ausgleichsfeder verschwenkt bis die herabgesenkte Position des Klappenelementes erreicht ist. Um das Klappenelement wieder in die aufrechte Position zu überführen, wird durch Aufbringen einer Kraft das Klappenelement mit Unterstützung der Ausgleichsfeder aufwärts gedreht bis die Schloßbolzen des Klappenelementes in die entsprechenden Gegenelemente des Rahmenelementes eingreifen.

Wenn bei der beschriebenen Anordnung demgegenüber die Heckklappenanordnung von der geschlossenen Position in den Hecktüröffnungs-Modus überführt werden soll, wird eine Handhabe zum Lösen der Verriegelungselemente betätigt, wodurch das Rahmenelement mit dem Klappenelement mit Unterstützung einer Ausgleichsfederanordnung in die vollständig geöffnete Position überführbar ist. Die Ausgleichsfederanordnung hält dann das Rahmenelement in der vollständig geöffneten Position solange bis die rückwärtige Zugangsöffnung wieder verschlossen werden soll, woraufhin das Rahmenelement herabgeschwenkt wird, bis die Verriegelungselemente automatisch zum Festhalten des Rahmenelementes in der fixierten Position in Eingriff kommen.

Auch in diesem Falle ist also wieder eine Möglichkeit zur unabhängigen bzw. gleichzeitigen Betätigung einzelner Klappenelemente gegeben, verbesserungswürdig ist allerdings auch bei dieser Anordnung wieder die hier vorgenommene Verwendung üblicher Dichtungselemente, um wieder die beschriebenen Schwierigkeiten mit der Abdichtung bei unterbrochen ausgebildeten Dichtungselementen insb. an den Verbindungsstellen der unterschiedlichen Profile und Dichtungselemente zu vermeiden.

Ausgehend von diesen bekannten Hecktüranordnungen für Fahrzeuge liegt der vorliegenden Erfindung die Aufgabe zugrunde, die bekannten Anordnungen unter Beibehaltung der bisherigen Vorteile in der Weise zu verbessern bzw. weiterzuentwickeln, daß die Nachteile der zuvor diskutierten Lösungen vermieden werden, wobei insb. verbesserte Alternativen für die gattungsgemäßen Hecktüren hinsichtlich der Abdichtungsmöglichkeiten z.B. für ein funktionsgerechtes Ablaufen von Regenwasser od. dgl. vorgeschlagen werden sollen. Die gewünschte Anordnung soll dabei auch einfach und kostengünstig herstellbar und zuverlässig und robust in den Funktionseigenschaften sein.

Die Aufgabe wird erfindungsgemäß dadurch gelöst, daß die Hecktür und mindestens ein Türteil jeweils eine separate Dichtungsanordnung umfassen, die in Bezug auf die mindestens eine andere Dichtungsanordnung unabhängig ausgebildet ist. Auf diese Weise wird erstmalig mit einfachen Mitteln die Möglichkeit geschaffen, die Abdichtungsmöglichkeiten z.B. für ein funktionsgerechtes Ablaufen von Regenwasser od. dgl. gegenüber den bekannten Lösungen deutlich zu verbessern, es wird dabei durch das Vorsehen jeweils einer separaten Dichtungsanordnung für die Hecktür und mindestens ein Türteil, die in Bezug auf die mindestens eine andere Dichtungsanordnung unabhängig ausgebildet ist, ein robustes und zuverlässiges Hecktürdichtsystem erzielt, ohne die Notwendigkeit die beispielsweise umlaufend ausgebildete Dichtungen, wie Schlauchdichtungen, unterbrechen zu müssen. Dadurch werden insb. die sich bei den bekannten Lösungen an den Verbindungsstellen der unterschiedlichen Profile und Dichtungselemente ergebenden Schwierigkeiten mit der Abdichtung z.B. für ein funktionsgerechtes Ablaufen von in diesem Bereich anfallendem Regenwasser vermieden. Die erfindungsgemäße Hecktüre ist dabei auch einfach und kostengünstig herstellbar.

Durch die Ausbildung der erfindungsgemäßen Hecktüre mit einem Rahmen mit oberen, unteren und seitlichen Holmen aus umgeformtem Blech oder Rohr gewinnt im übrigen die Hecktür zwar geringfügig an Gewicht aber auch erheblich an Steifigkeit. Für die Fertigung der Fahrzeuge ergibt sich ein wesentlicher Vorteil bei der Herstellung der Hecktüren und deren Montage.

Die erfindungsgemäße Hecktüre ist vorgesehen für vielfältige Variationen von Hecktüren mit
- zu öffnendem Kofferraum / unterem Türteil,
- oberem Türteil, z.B. durch Versenken des Heckfensters,
- kompletter Hecktür,
wobei dazu lediglich ein Rahmen in der Vormontage benötigt wird, der dann mit der Karosserie bei der Endmontage verbunden wird.

Bei der bevorzugten Ausführungsform der vorliegenden Erfindung sind zwischen der Karosserie und dem Rahmen die Dichtungsanordnungen so gestaltet oder angeordnet, daß sie bei geschlossener Hecktür Wasser abweisend sind. Außerdem ist der Rahmen als Rinne gestaltet zur Ableitung von anfallendem Regenwasser im Bereich der Hecktür zum Heck des Fahrzeuges. Damit entfallen zahlreiche Einzeldichtungen oder Wasserabfuhröffnungen im Bereich der beiden Hecktür-Teile, wie dies beim Stand der Technik häufig anzutreffen ist.

Nach einem weiteren bevorzugten Merkmal der vorliegenden Erfindung ist das untere Türteil als eine Kofferraumklappe ausgebildet, dabei empfiehlt es sich, daß die Hecktür und das als Kofferraumklappe ausgebildete untere Türteil jeweils eine separate Dichtungsanordnung umfassen, die in Bezug auf die entsprechende andere Dichtungsanordnung unabhängig ausgebildet ist. Auf diese Weise wird eine deutliche Verbesserung der Abdichtungseigenschaften bei dieser gängigen Art von Hecktürausführung erzielt.

Zweckmäßig ist es nach einem weiteren Merkmal der vorliegenden Erfindung, daß die separate Dichtungsanordnung für das als Kofferraumklappe ausgebildete untere Türteil eine i.w. umlaufend geschlossene Schlauchdichtung umfaßt. Dabei empfiehlt es sich, daß die umlaufend geschlossene Schlauchdichtung für das als Kofferraumklappe ausgebildete untere Türteil i.w. lückenlos auf einem hochstehenden und geschlossenen Kederflansch angeordnet ist. Dies ist eine konstruktiv einfache Lösung zur Ausbildung der separaten Dichtungsanordnung für das als Kofferraumklappe ausgebildete untere Türteil.

Es empfiehlt sich nach einem weiteren Merkmal der vorliegenden Erfindung, daß die separate Dichtungsanordnung für die Hecktür eine i.w. umlaufend geschlossene Schlauchdichtung umfaßt. Diese i.w. umlaufend geschlossene Schlauchdichtung für die Hecktür ist dabei zweckmäßig karosserieseitig auf einem i.w. umlaufend geschlossenen Flansch angeordnet. Dies ist wiederum eine konstruktiv einfache Lösung zur Ausbildung dieser separaten Dichtungsanordnung, in diesem Fall für die Hecktür.

Nach einem weiteren Merkmal der vorliegenden Erfindung ist vorgesehen, daß im im Bereich der seitlichen und hinteren Kofferraumklappenfuge die separate Dichtungsanordnung für die Hecktür i.w. unterhalb der separaten Dichtungsanordnung für das als Kofferraumklappe ausgebildete untere Türteil angeordnet ist, derart, daß sich nur eine sichtbare Fuge ergibt. Dabei ist zweckmäßig in diesem Bereich der seitlichen und hinteren Kofferraumklappenfuge der Rahmen der Hecktür derart gestaltet, daß das dort in diese Kofferraumklappenfuge laufende Wasser sicher über diesen Rahmen in die karosserieseitige Heckdeckelfuge abläuft. Mit diesen Mitteln wird ein besonders robustes und zuverlässiges Türdichtsystem erzielt ohne dabei z.B. die umlaufenden Schlauchdichtungen unterbrechen zu müssen.

Es ist nach einem weiteren Merkmal der vorliegenden Erfindung vorgesehen, daß das als Kofferraumklappe ausgebildete untere Türteil auf den seitlichen Holmen in Gelenkeinrichtungen schwenkbar gelagert ist, wobei vorzugsweise die Gelenkeinrichtung als Parallelogrammgestänge mit vier Gelenken ausgebildet ist. Die Gelenkeinrichtung kann aber auch durch jedes geeignete andere Scharnier gebildet werden, z. B. als einfaches Scharnier oder als Schwanenhalsscharnier. Maßgeblich ist unter anderem die Wölbung der Heckscheibe, da dies die Anordnung der Gelenkeinrichtung beeinflußt.

Der untere Türteil ist gemäß einem weiteren Ausgestaltungsmerkmal der vorliegenden Erfindung durch je eine Dämpferstütze auf den seitlichen Holmen in einer Offen-Position haltbar, wie dies schon für sich aus dem Stand der Technik her bekannt ist. Häufig werden diese Dämpferstützen auch als Gewichtsausgleich bezeichnet, stützen jedoch - beispielsweise als Gasdruckdämpfer - lediglich das Gewicht ab, vorzugsweise in allen möglichen Winkelstellungen des Türteils, in jedem Fall jedoch in der maximal möglichen Offen-Position.

Zur Platzersparnis und besten Wirkung werden die Dämpferstützen erfindungsgemäß an den Gelenkeinrichtungen angebracht, z.B. zwischen Gestängeteilen auf dem Rahmen einerseits und nahe der Außenkante des Türteils andererseits.

In einer besonderen Ausführungsform sind die Gelenkeinrichtungen so ausgebildet, daß das untere Türteil in eine Offen-Position etwa vertikal oberhalb der Geschlossen-Position im Rahmen schwenkbar ist. Dadurch muß die Person, die das untere Türteil öffnet, nicht für eine größere Ausschwenkbewegung einer Kofferraumklappe Platz machen und eine Beladung ist auch bei geringem Raum hinter dem Fahrzeug möglich. Außerdem eignet sich diese Variante, um aus dem Fahrzeug herausragende Teile besser zu transportieren, da ein derartiges Türteil leicht in der Offen-Position arretierbar ist. Bei bekannten Kofferraumklappen ist immer damit zu rechnen, daß diese zufallen oder stark schaukeln.

Nach einem weiteren Ausgestaltungsmerkmal der vorliegenden Erfindung ist vorgesehen, daß das untere Türteil eine Einrichtung zum Verriegeln dieses Türteiles am unteren Holm aufweist.

Beim Stand der Technik werden die Dampferstützen für die Hecktür insgesamt und der untere Türteil häufig kombiniert. Zur besseren Gewichtskompensation in allen Offen-Positionen der Hecktür zwischen geringem und maximalem Öffnungswinkel ist erfindungsgemäß jedoch vorgesehen, daß im Bereich zwischen der fest angebrachten Achse und den Gelenkeinrichtungen zwischen Karosserie und Rahmen mindestens eine weitere Dämpferstütze angeordnet ist zum Abstützen des Gewichts des Rahmens in einer Offen-Position der Hecktür. Dabei kann der Fachmann sich einseitig auf eine Stütze beschränken oder beidseitig zwei dünnere Dämpferstützen, vorzugsweise neben der Dichtung und in einer Karosseriemulde, unter dem Rahmen anordnen.

Letztlich läßt die Rahmenkonstruktion es zu, daß auch der obere Türteil als zu öffnender Teil der Heckklappe gestaltet wird. Vorzugsweise ist dabei nach einem letzten Merkmal der vorliegenden Erfindung der obere Türteil als Heckfenster gestaltet, welches in den unteren Türteil in eine Offen-Position versenkbar ist.

Vorteile und Zwecke der Erfindung werden aus der folgenden Beschreibung im Zusammenhang mit einer schematischen beispielhaften Zeichnung für den Fachmann besonders deutlich.

Es zeigen:
- Figur 1: in perspektivischer Ansicht eine Heckpartie eines Fahrzeuges mit einer erfindungsgemäß ausgebildeten Hecktür im Teilschnitt;
- Figur 2: eine Schnittansicht der erfindungsgemäß ausgebildeten Hecktür entlang der Linie A-A in Fig. 1,
- Figur 3: eine Schnittansicht der erfindungsgemäß ausgebildeten Hecktür entlang der Linie B-B in Fig. 1,
- Figur 4: eine Schnittansicht einer abgewandelten Ausführungsform der erfindungsgemäß ausgebildeten Hecktür ähnlich der Darstellung nach Fig. 2,
- Figur 5: eine Teil- Schnittansicht der abgewandelten Ausführungsform gemäß Fig. 4 betr. die Einrichtung zur Verriegelung des unteren Türteiles an dem Rahmen,
- Figur 6: einen Teilschnitt durch eine Heckpartie eines weiteren Fahrzeuges mit dem oberen Türteil einer Hecktür in einer Offen-Position bei einer weiteren erfindungsgemäßen Ausführungsform;
- Figur 7a - c: Teilschnitte durch eine Heckpartie eines weiteren Fahrzeugs mit erfindungsgemäßer Hecktür in einer letzten Ausführungsform.

Soweit im Folgenden identische Bezugszeichen verwendet werden, sind damit Teile mit identischen Funktionen bezeichnet.

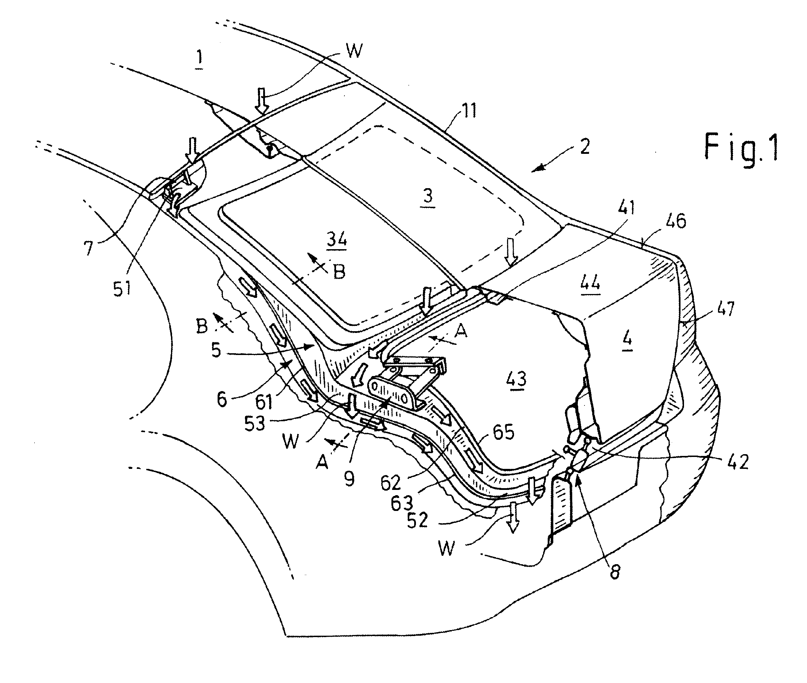

Die erfindungsgemäße Hecktüre für ein generell mit 1 bezeichnetes Fahrzeug ist in den Figuren der Zeichnung mit 2, 21, 22 bezeichnet. Die Hecktüre 2, 21, 22 ist vorgesehen für ein Fahrzeug, wie z.B. ein Fahrzeug 1 mit Fließheck. Es ist dazu in der Fig. 1 der Zeichnung die Heckpartie eines Fahrzeuges 1 mit Fließheck mit einer erfindungsgemäß ausgebildeten Hecktür 2 dargestellt. Die Hecktüre 2 ist um eine an der mit 11 bezeichneten Karosserie des Fahrzeugs 1 fest angebrachte obere Achse 7 schwenkbar gelagert und weist je ein oberes Türteil 3 und unteres Türteil 4 auf, von denen mindestens ein Türteil 3,4 unabhängig von dem anderen Türteil 3,4 oder der Hecktür 2 insgesamt zu öffnen ist. Es besteht dabei bei dem dargestellten Ausführungsbeispiel das obere Türteil 3 aus einem Heckfenster und das untere Türteil 4 aus einer Kofferraumklappe 44.

Die Hecktüre 2 weist einen die Türteile 3,4 dichtend aufnehmenden Rahmen 5 mit einem oberen Hlm 51, einem unteren Holm 52 und seitlichen Holmen 53 auf, der obere Holm 51 ist dabei mit der fest angebrachten Achse 7 verbunden und um diese in eine Offen-Position des Rahmens 5 schwenkbar, weiterhin weist der untere Holm 52 eine Einrichtung 8 zum Verriegeln des Rahmens 5 und damit der Hecktür 2 an der Karosserie 11 auf. Es umfaßt dabei die Hecktüre 2 eine generell mit 6 bezeichnete Dichtungsanordnung, es ist dabei erfindungsgemäß vorgesehen, daß die Hecktüre 2 und mindestens ein Türteil 3,4 jeweils eine separate Dichtungsanordnung 61,62 umfassen, die in Bezug auf die mindestens eine andere Dichtungsanordnung unabhängig ausgebildet ist. Auf diese Weise wird mit einfachen Mitteln die Möglichkeit geschaffen, die Abdichtungsmöglichkeiten z.B. für ein funktionsgerechtes Ablaufen von Regenwasser od. dgl. gegenüber den bekannten Lösungen deutlich zu verbessern, es wird dabei durch das Vorsehen jeweils einer separaten Dichtungsanordnung 61,62 für die Hecktüre 2 und mindestens ein Türteil 3,4, die in Bezug auf die mindestens eine andere Dichtungsanordnung unabhängig ausgebildet ist, ein robustes und zuverlässiges Hecktürdichtsystem erzielt, ohne die Notwendigkeit die beispielsweise umlaufend ausgebildete Dichtungen, wie Schlauchdichtungen, unterbrechen zu müssen. Dadurch werden insb. die sich bei den bekannten Lösungen an den Verbindungsstellen der unterschiedlichen Profile und Dichtungselemente ergebenden Schwierigkeiten mit der Abdichtung z.B. für ein funktionsgerechtes Ablaufen von in diesem Bereich anfallendem Regenwasser vermieden, dabei ist die erfindungsgemäße Hecktüre 2 auch einfach und kostengünstig herstellbar. Durch die Ausbildung der erfindungsgemäßen Hecktüre 2 mit einem Rahmen 5 mit oberen, unteren und seitlichen Holmen 51-53 aus umgeformtem Blech oder Rohr gewinnt im übrigen die Hecktür 2 zwar geringfügig an Gewicht aber auch erheblich an Steifigkeit. Für die Fertigung der Fahrzeuge ergibt sich dadurch ein wesentlicher Vorteil bei der Herstellung der Hecktüren 2 und deren Montage.

Die erfindungsgemäße Hecktüre 2 ist vorgesehen für vielfältige Variationen von Hecktüren 2 mit
- zu öffnendem Kofferraum / unterem Türteil 4,
- oberem Türteil 3, z.B. durch Versenken des Heckfensters,
- kompletter Hecktür 2,
wobei dazu lediglich ein Rahmen 5 in der Vormontage benötigt wird, der dann mit der Karosserie 11 bei der Endmontage verbunden wird.

Bei den in den Figuren der Zeichnung dargestellten Ausführungsbeispielen sind zwischen der Karosserie 1 und dem Rahmen 5 die Dichtungsanordnungen 61,62 so gestaltet oder angeordnet, daß sie bei geschlossener Hecktür Wasser W abweisend sind. Es ist dabei der Rahmen 5 als Rinne gestaltet zur Ableitung von anfallendem Regenwasser W im Bereich der Hecktür 2, 3, 4 zum Heck des Fahrzeuges. Damit entfallen zahlreiche Einzeldichtungen oder Wasserabfuhröffnungen im Bereich der beiden Hecktür-Teile 3,4, wie dies bei den zuvor bekannten Lösungen häufig erforderlich war.

Bei den in den Figuren der Zeichnung dargestellten Ausführungsbeispielen bildet das untere Türteil 4, 44 eine Kofferraumklappe 4,45, es umfassen dabei die Hecktür 2,21,22 und das als Kofferraumklappe 4,45 ausgebildete untere Türteil 4, 44 jeweils eine separate Dichtungsanordnung 61,62, die in Bezug auf die entsprechende andere Dichtungsanordnung unabhängig ausgebildet ist. Auf diese Weise wird eine deutliche Verbesserung der Abdichtungseigenschaften bei dieser gängigen Art von Hecktürausführung erzielt.

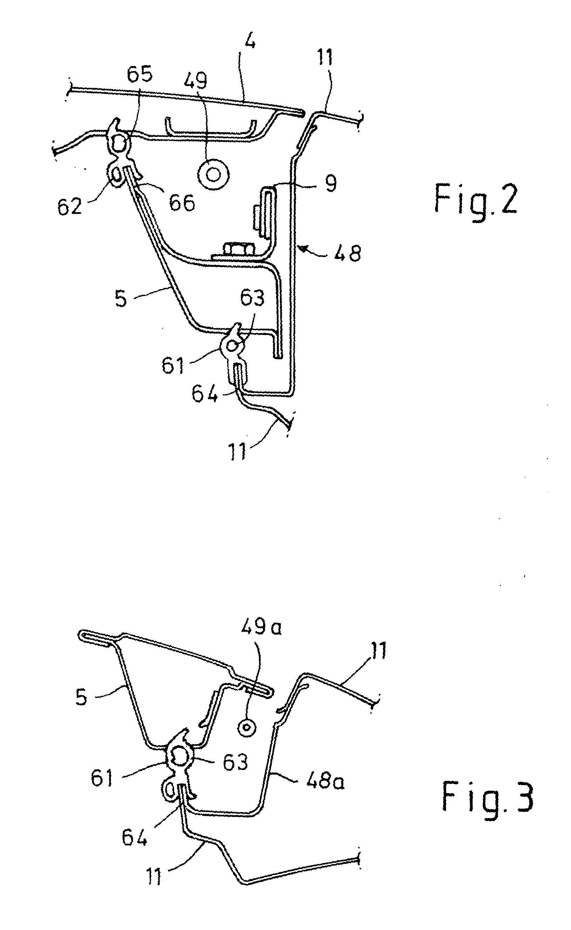

Die separate Dichtungsanordnung 62 für das als Kofferraumklappe 4,45 ausgebildete untere Türteil 4,44 umfaßt bei den dargestellten Ausführungsbeispielen, siehe z.B. die Fig. 2 der Zeichnung, eine i.w. umlaufend geschlossene Schlauchdichtung 65, es ist dabei diese i.w. umlaufend geschlossene Schlauchdichtung 65 für das als Kofferraumklappe 4,45 ausgebildete untere Türteil 4, 44 i.w. lückenlos auf einem hochstehenden und geschlossenen Kederflansch 66 angeordnet.

Die separate Dichtungsanordnung 61 für die Hecktür 2,21,22 umfaßt, siehe z.B. die Fig. 2 oder 3 der Zeichnung, eine i.w. umlaufend geschlossene Schlauchdichtung 63, es ist in diesem Falle diese i.w. umlaufend geschlossene Schlauchdichtung 63 für die Hecktür 2,21,22 karosserieseitig auf einem i.w. umlaufend geschlossenen Flansch 64 angeordnet.

Es ist dazu in der Fig. 2 der Zeichnung auch schematisch ein Teil des Rahmens 5, der Karosserie 11 sowie des unteren Türteiles 4 mit einem dafür vorgesehenen Dämpfer 49 dargestellt. In ähnlicher Weise ist in Fig. 3 wieder schematisch ein Teil des Rahmens 5, der Karosserie 11 sowie ein Dämpfer 49a für die Hecktüre 2 dargestellt. Die karosserieseitige Deckelfuge ist in diesem Bereich mit 48a bezeichnet.

Im Bereich der seitlichen und hinteren Kofferraumklappenfuge 46,47 ist, siehe insb. die Darstellung gemäß der Fig. 1 und der Fig. 2 der Zeichnung, die separate Dichtungsanordnung 61 für die Hecktür 2,21,22 i.w. unterhalb der separaten Dichtungsanordnung 62 für das als Kofferraumklappe 4,45 ausgebildete untere Türteil 4, 44 angeordnet, derart, daß sich nur eine sichtbare Fuge ergibt. Dabei ist in diesem Bereich der seitlichen und hinteren Kofferraumklappenfuge 46,47 der Rahmen 5 der Hecktür 2,21,22 derart gestaltet, daß das dort in diese Kofferraumklappenfuge 46,47 laufende Wasser sicher über diesen Rahmen 5 in die karosserieseitige Heckdeckelfuge 48 abläuft, siehe Fig. 2. Mit diesen Mitteln wird ein besonders robustes und zuverlässiges Türdichtsystem erzielt ohne dabei z.B. die umlaufenden Schlauchdichtungen unterbrechen zu müssen.

Das als Kofferraumklappe 4,45 ausgebildete untere Türteil 4, 44 ist bei dem Ausführungsbeispiel gemäß Fig. 1 auf den seitlichen Holmen 53 in Gelenkeinrichtungen 9,91 schwenkbar gelagert, dabei sind die Gelenkeinrichtungen 9, 91 als Parallelogrammgestänge mit vier Gelenken ausgebildet, an dem die Abdeckung 41 der Kofferraumklappe 4 schwenkbar zu befestigen ist.

Das untere Türteil 4, 44 ist bei dem Ausführungsbeispiel gemäß Fig.1 durch je eine Dämpferstütze auf den seitlichen Holmen 53 in einer Offen - Position haltbar, es sind dabei zur Platzersparnis und zur besseren Wirkung die Dämpferstützen an den Gelenkeinrichtungen 9, 91 angebracht, z.B. zwischen Gestängeteilen auf dem Rahmen 5 einerseits und nahe der Außenkante des Türteils andererseits.

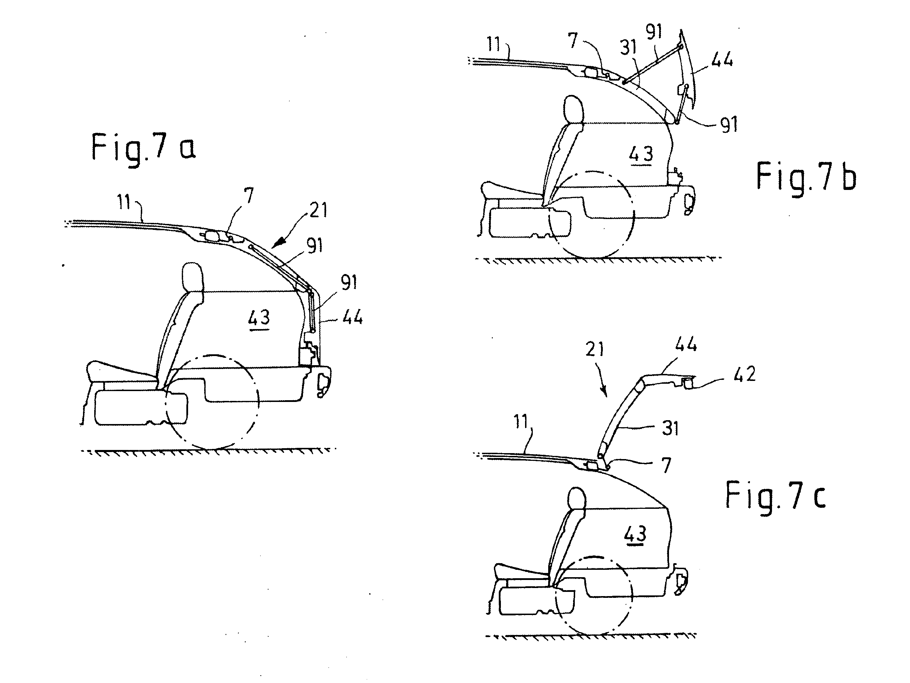

Bei dem Ausführungsbeispiel gemäß der Fig. 7 der Zeichnung ist die Gelenkeinrichtung 91 so ausgebildet, daß das untere Türteil 44 in eine Offen - Position etwa vertikal oberhalb der Geschlossen - Position im Rahmen 5 schwenkbar ist. Dadurch muß die Person, die das untere Türteil 44 öffnet, nicht für eine größere Ausschwenkbewegung einer Kofferraumklappe Platz machen und eine Beladung ist auch bei geringem Raum hinter dem Fahrzeug möglich. Außerdem eignet sich diese Variante, um aus dem Fahrzeug herausragende Teile besser zu transportieren, da ein derartiges Türteil leicht in der Offen-Position arretierbar ist. Bei bekannten Kofferraumklappen ist immer damit zu rechnen, daß diese zufallen oder stark schaukeln.

Das untere Türteil 4,44 weist bei dem Ausführungsbeispiel gemäß Fig. 1 eine Einrichtung 42 zum Verriegeln dieses Türteiles am unteren Holm 52 auf.

Bei bekannten Lösungen von Hecktüranordnungen werden oftmals die Dampferstützen für die Hecktür 2,21,22 insgesamt und der untere Türteil 4,44 kombiniert. Zur besseren Gewichtskompensation in allen Offen-Positionen der Hecktüre 2,21,22 zwischen geringem und maximalem Öffnungswinkel ist bei dem Ausführungsbeispiel z.B. gemäß Fig.7 jedoch vorgesehen, daß im Bereich zwischen der fest angebrachten Achse 7 und der Gelenkeinrichtung 9,91 zwischen Karosserie 11 und Rahmen 5 mindestens eine weitere Dämpferstütze angeordnet ist zum Abstützen des Gewichts des Rahmens 5 in einer Offen-Position der Hecktür 2,21,22. Dabei kann der Fachmann sich einseitig auf eine Stütze beschränken oder beidseitig zwei dünnere Dämpferstützen, vorzugsweise neben der Dichtung und in einer Karosseriemulde, unter dem Rahmen 5 anordnen.

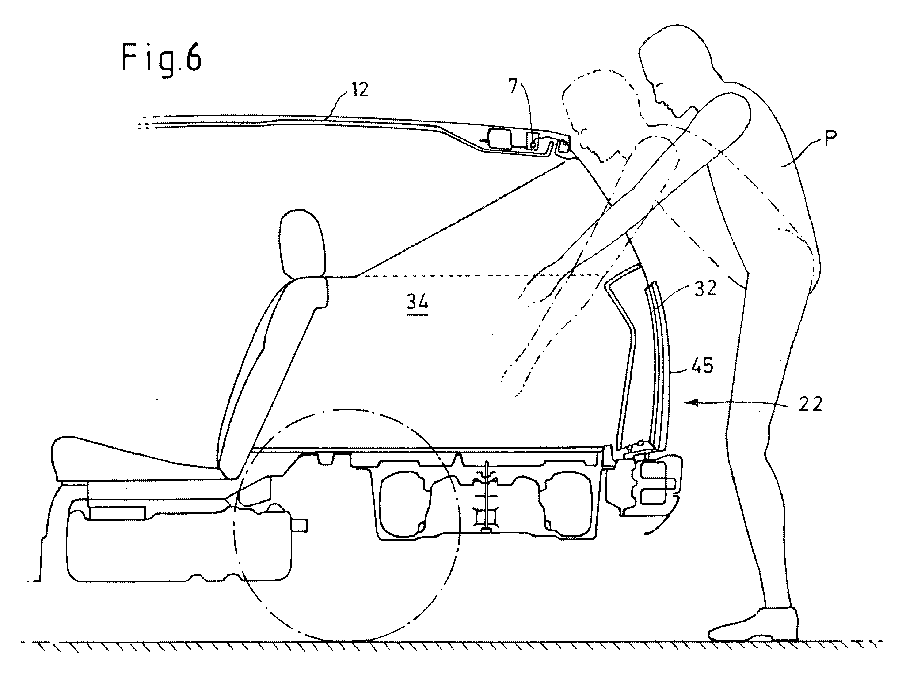

Bei dem Ausführungsbeispiel gemäß der Fig. 6 der Zeichnung ist die Rahmenkonstruktion derart beschaffen, daß auch der obere Türteil 32 als zu öffnender Teil der Heckklappe gestaltet wird, es ist dabei der obere Türteil 32 als Heckfenster gestaltet, welches in den unteren Türteil 45 in eine Offen-Position versenkbar ist.

Bei dem Ausführungsbeispiel gemäß Fig. 1 weist also der als Kofferraumklappe 44 ausgebildete untere Türteil 4 an seinem unteren Ende eine als Verschluß ausgeführte Einrichtung 42 zum Verriegeln auf, mit dem er mit dem Rahmen 5 verbindbar ist, wenn sich diese Klappe 44 in Geschlossen-Position - wie dargestellt - befindet. Eine Bedienperson kann also wahlweise den Verschluß 42 öffnen, um Zugang zum Kofferraum 43 zu erhalten oder die Verriegelung 8 des Rahmens 5 mit der Karosserie 11 öffnen, um die gesamte Hecktür 2, um Achse 7 schwenkend, zu öffnen und so zugleich Zugriff auf den Innenraum 34 hinter dem Heckfenster / oberen Türteil 3 und den Kofferraum 43 zu ermöglichen.

Die Hecktüre 2 bzw. der untere Türteil 4 ist über die beschriebene Dichtungsanordnungen 61,62 gegenüber der Karosserie 11 abgedichtet, wenn die Hecktüre 2 in Geschlossen-Position ist, wie dargestellt. Der Rahmen 5 ist dabei wie beschrieben in seiner Oberflächenstruktur als Ablaufrinne gestaltet, so daß Regenwasser oder Schwitzwasser, in Fig. 1 gekennzeichnet durch Pfeile W, welches durch die zwangsläufig vorhandenen Trennfugen der Türteile einsickern kann, auch wieder zum Fahrzeugheck hin ablaufen kann.

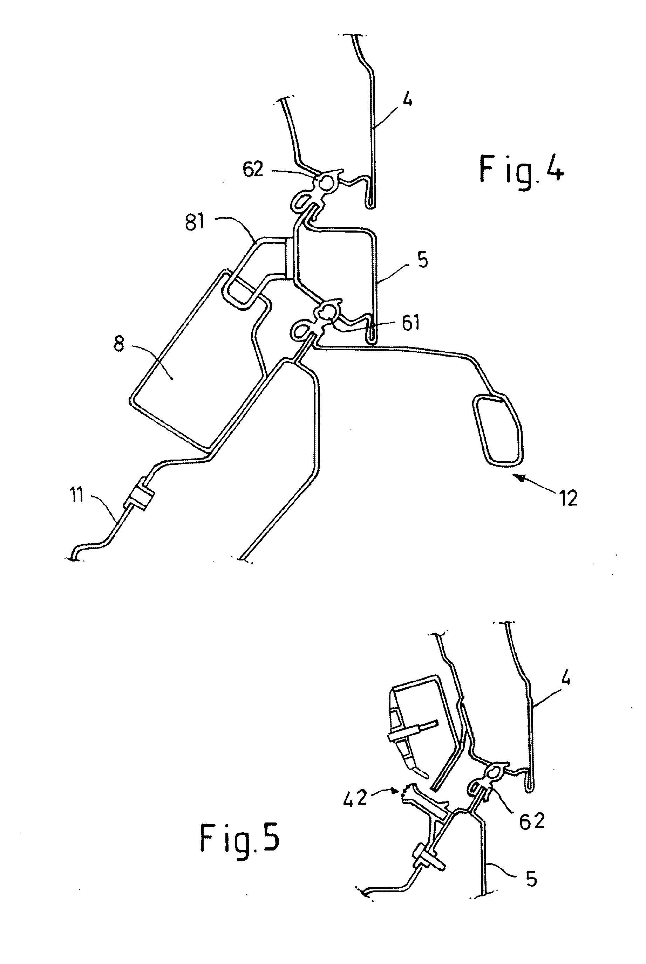

Die Fig. 4, 5, 6 und 7a-c zeigen andere Fahrzeuge mit verschiedenen Ausführungsformen der Heckpartien, wie sie beispielsweise bei Mini-Van verwendet werden.

Die Fig. 4 zeigt eine Schnittansicht einer abgewandelten Ausführungsform der erfindungsgemäß ausgebildeten Hecktüre 2 einer Steil heck- Version eines Fahrzeuges mit erfindungsgemäßen Dichtungsanordnungen 61,62 und angedeutetem Teil des Rahmens 5, der Karosserie 11 sowie des unteren Türteiles 4. Weiterhin dargestellt sind eine Stoßstange 12, sowie eine Einrichtung 8 zum Verriegeln der Hecktüre 2 bzw. des Rahmens 5 an der Karosserie 11 mit einem dazugehörigen Anschlagelement 81. Die Fig. 5 zeigt eine Teil- Schnittansicht der abgewandelten Ausführungsform gemäß Fig. 4 betr. eine Einrichtung 42 zum Verriegeln des unteren Türteiles 4 an dem Rahmen 5, es kann diese Einrichtung 42 zum Verriegeln und das entsprechende, hier nicht bezeichnete Gegenelement eine an sich bekannte Ausbildung aufweisen. Ebenfalls dargestellt ist die Dichtunganordnung 62 für das untere Türteil 4.

Fig. 6 zeigt an einem schematischen Teilschnitt durch eine Heckpartie eines Fahrzeugs mit Karosserie 12 die Funktion der erfindungsgemäßen Hecktüre 22 mit hier nicht dargestellten erfindungsgemäßen Dichtungsanordnungen 61,62, wobei die Hecktüre 22 mit Gelenk 7 schwenkbar an der Karosserie 12 befestigt ist. Der Übersichtlichkeit halber wurde auf die Skizzierung des Rahmens 5 der Hecktüre 2 verzichtet. Eine Person P kann in den Innenraum 34 durch die Hecktüre 2 greifen, indem sie das Heckfenster bzw. den oberen Türteil 32 z.B. mittels üblicher Fensterheber oder anderer Entriegelung in den unteren Türteil 45 absenkt. Dabei wird das obere Türteil 32 im Rahmen - nicht gezeigt - seitlich geführt.

Die Fig. 7a, 7b, 7c zeigen eine erfindungsgemäße Hecktüre 21 mit hier nicht dargestellten erfindungsgemäßen Dichtungsanordnungen 61,62 in Geschlossen-Position (Fig. 7a), in einer Offen-Position mit geöffnetem unterem Türteil 44 (Fig. 7b) und komplett geöffneter Hecktüre 21 in der Offen-Position gemäß Fig. 7c.

Der hier ebenfalls nicht dargestellte Rahmen 5 der Hecktüre 2 ist mit der Karosserie 11 im Gelenk 7 schwenkbar verbunden. Die Hecktüre 21 hat einen oberen Türteil 31 und einen unteren Türteil 44, der mittels Vier-Gelenk-Gestänge 91 mit dem Rahmen 5 verbunden ist. Dadurch ist ein separates Öffnen des unteren Türteils 44 möglich, um zum Kofferraum 43 zu gelangen. Zum Verschließen hat das Türteil 44 einen Verschluß 42, mit dem es mit dem Rahmen 5 der Hecktüre 21 verriegelt werden kann. Das Viergelenk 91 ist in dieser Ausführung gemäß Fig. 7b so gestaltet, daß das Türteil 44 vertikal oberhalb des geöffneten Kofferraums 43 in einer maximalen Offen-Position gehalten wird.

Wenn anstelle des Verschlusses 42 die Rahmen-Verriegelung (nicht gezeigt) mit der Karosserie 11 gelöst wird, kann, wie in Fig. 7c gezeigt, die gesamte Hecktüre 21 bis in die maximale Offen-Position geschwenkt werden und dort durch die oben beschriebenen, nicht gezeigten, Dämpferstützen gehalten werden.

## Patentansprüche

1. Hecktür (2,21,22) für ein Fahrzeug, welche um eine an der Karosserie des Fahrzeugs fest angebrachte obere Achse (7) schwenkbar ist und je ein oberes Türteil (3,32) und unteres Türteil (4,44) aufweist, von denen mindestens ein Türteil (3,32,4,44) unabhängig von dem anderen Türteil (3,32,4,44) oder der Hecktür (2,21,22) insgesamt zu öffnen ist, wobei die Hecktür (2, 21, 22) einen die Türteile (3,32,4,44) dichtend aufnehmenden Rahmen (5) mit oberen, unteren und seitlichen Holmen (51 - 53) aufweist, der obere Holm (51) mit der fest angebrachten Achse (7) verbunden und um diese in eine Offen-Position des Rahmens (5) schwenkbar ist und der untere Holm (52) eine Einrichtung (8) zum Verriegeln der Hecktür (2, 21, 22) an der Karosserie (1, 11, 12) aufweist, **dadurch gekennzeichnet, daß** die Hecktür (2, 21, 22) und mindestens ein Türteil (32,4,44) jeweils eine separate Dichtungsanordnung (61,62) umfassen, die in Bezug auf die mindestens eine andere Dichtungsanordnung unabhängig ausgebildet ist.

2. Hecktür nach Anspruch 1, **dadurch gekennzeichnet, daß** zwischen der Karosserie (1) und dem Rahmen (5) die Dichtungsanordnungen (61,62) so gestaltet oder angeordnet sind, daß sie bei geschlossener Hecktür Wasser (W) abweisend sind.

3. Hecktür nach einem der vorhergehenden Ansprüche, **dadurch gekennzeichnet, daß** der Rahmen (5) als Rinne gestaltet ist zur Ableitung von anfallendem Regenwasser (W) im Bereich der Hecktür (2, 3, 4) zum Heck des Fahrzeugs.

4. Hecktür nach einem der vorhergehenden Ansprüche, **dadurch gekennzeichnet, daß** das untere Türteil (4, 44) eine Kofferraumklappe (4,45) bildet.

5. Hecktür nach Anspruch 4, **dadurch gekennzeichnet, daß** die Hecktür (2,21,22) und das als Kofferraumklappe (4,45) ausgebildete untere Türteil (4, 44) jeweils eine separate Dichtungsanordnung (61,62) umfassen, die in Bezug auf die entsprechende andere Dichtungsanordnung unabhängig ausgebildet ist.

6. Hecktür nach Anspruch 5, **dadurch gekennzeichnet, daß** die separate Dichtungsanordnung (62) für das als Kofferraumklappe (4,45) ausgebildete untere Türteil (4, 44) eine im Wesentlichen umlaufend geschlossene Schlauchdichtung (65) umfaßt.

7. Hecktür nach Anspruch 6, **dadurch gekennzeichnet, daß** die im Wesentlichen umlaufend geschlossene Schlauchdichtung (65) für das als Kofferraumklappe (4,45) ausgebildete untere Türteil (4, 44) im Wesentlichen lückenlos auf einem hochstehenden und geschlossenen Kederflansch (66) angeordnet ist.

8. Hecktür nach einem der vorhergehenden Ansprüche, **dadurch gekennzeichnet, daß** die separate Dichtungsanordnung (61) für die Hecktür (2,21,22) eine im Wesentlichen umlaufend geschlossene Schlauchdichtung (63) umfaßt.

9. Hecktür nach Anspruch 8, **dadurch gekennzeichnet, daß** die im Wesentlichen umlaufend geschlossene Schlauchdichtung (63) für die Hecktür (2,21,22) karosserieseitig auf einem im Wesentlichen umlaufend geschlossenen Flansch (64) angeordnet ist.

10. Hecktür nach einem der vorhergehenden Ansprüche, **dadurch gekennzeichnet, daß** im Bereich der seitlichen und hinteren Kofferraumklappenfuge (46,47) die separate Dichtungsanordnung (61) für die Hecktür (2,21,22) im Wesentlichen unterhalb der separaten Dichtungsanordnung (62) für das als Kofferraumklappe (4,45) ausgebildete untere Türteil (4, 44) angeordnet ist, derart, daß sich nur eine sichtbare Fuge ergibt.

11. Hecktür nach Anspruch 10, **dadurch gekennzeichnet, daß** im Bereich der seitlichen und hinteren Kofferraumklappenfuge (46,47) der Rahmen (5) der Hecktür (2,21,22) derart gestaltet ist, daß das dort in diese Kofferraumklappenfuge (46,47) laufende Wasser sicher über diesen Rahmen (5) in die karosserieseitige Heckdeckelfuge (48) abläuft.

12. Hecktür nach einem der vorhergehenden Ansprüche, **dadurch gekennzeichnet, daß** das als Kofferraumklappe (4,45) ausgebildete untere Türteil (4, 44) auf den seitlichen Holmen (53) in Gelenkeinrichtungen (9,91) schwenkbar gelagert ist.

13. Hecktür nach Anspruch 12, **dadurch gekennzeichnet, daß** die Gelenkeinrichtungen (9, 91) als Parallelogrammgestänge mit vier Gelenken ausgebildet sind.

14. Hecktür nach einem der vorhergehenden Ansprüche, **dadurch gekennzeichnet, daß** das untere Türteil (4, 44) durch je eine Dämpferstütze auf den seitlichen Holmen (53) in einer Offen - Position haltbar ist.

15. Hecktür nach den Ansprüchen 12 und 14, **dadurch gekennzeichnet, daß** die Dämpferstützen an den Gelenkeinrichtungen (9, 91) angebracht sind.

16. Hecktür nach Anspruch 12, **dadurch gekennzeichnet, daß** die Gelenkeinrichtung (91) so ausgebildet ist, daß das untere Türteil (44) in eine Offen - Position etwa vertikal oberhalb der Geschlossen - Position im Rahmen (5) schwenkbar ist.

17. Hecktür nach einem der vorhergehenden Ansprüche, **dadurch gekennzeichnet, daß** das untere Türteil (4, 44) eine Einrichtung (42) zum Verriegeln dieses Türteiles am unteren Holm (52) aufweist.

18. Hecktür nach Anspruch 12, **dadurch gekennzeichnet, daß** im Bereich zwischen der fest angebrachten Achse (7) und den Gelenkeinrichtutgen (9, 91) zwischen Karosserie (1, 11, 12) und Rahmen (5, 53) eine weitere Dämpferstütze angeordnet ist zum Abstützen des Gewichts des Rahmens (5) in einer Offen-Position der Hecktür.

19. Hecktür nach einem der vorhergehenden Ansprüche, **dadurch gekennzeichnet, daß** der obere Türteil (32) als Heckfenster gestaltet ist, welches in den unteren Türteil (45) in eine Offen - Position versenkbar ist.

## Claims

1. Liftgate (2, 21, 22) for a vehicle, said liftgate being pivotable about an upper pivot (7), which is attached fixedly to the vehicle body, and in each case having an upper liftgate section (3, 32) and a lower liftgate section (4, 44), of which at least one liftgate section (3, 32, 4, 44) can be opened independently of the other liftgate section (3, 32, 4, 44) or of the liftgate (2, 21, 22) as a whole, wherein the liftgate (2, 21, 22) has a frame (5) which receives the liftgate sections (3, 32, 4, 44) in a sealing manner and has upper, lower and lateral struts (51-53), the upper strut (51) is connected to the fixedly attached pivot (7) and can be pivoted about the latter into an open position of the frame (5), and the lower strut (52) has a device (8) for locking the liftgate (2, 21, 22) to the vehicle body (1, 11, 12),
**characterized in that** the liftgate (2, 21, 22) and at least one liftgate section (32, 4, 44) each comprise a separate sealing arrangement (61, 62) which is formed independently with regard to the at least one other sealing arrangement.

2. Liftgate according to Claim 1, **characterized in that** the sealing arrangements (61, 62) between the vehicle body (1) and the frame (5) are designed or arranged in such a manner that they repel water (W) when the liftgate is closed.

3. Liftgate according to one of the preceding claims, **characterized in that** the frame (5) is designed as a channel for conducting away rainwater (W) arising in the region of the liftgate (2, 3, 4) to the rear of the vehicle.

4. Liftgate according to one of the preceding claims, **characterized in that** the lower liftgate section (4, 44) forms a luggage compartment flap (4, 45).

5. Liftgate according to Claim 4, **characterized in that** the liftgate (2, 21, 22) and the lower liftgate section (4, 44) designed as the luggage compartment flap (4, 45) each comprise a separate sealing arrangement (61, 62) which is formed independently with regard to the corresponding other sealing arrangement.

6. Liftgate according to Claim 5, **characterized in that** the separate sealing arrangement (62) for the lower liftgate section (4, 44) designed as the luggage compartment flap (4, 45) comprises a substantially peripherally closed tubular seal (65).

7. Liftgate according to Claim 6, **characterized in that** the substantially peripherally closed tubular seal (65) for the lower tailgate section (4, 44) designed as the luggage compartment flap (4, 45) is arranged substantially without a gap on an elevated and closed weather strip flange (66).

8. Liftgate according to one of the preceding claims, **characterized in that** the separate sealing arrangement (61) for the liftgate (2, 21, 22) comprises a substantially peripherally closed tubular seal (63).

9. Liftgate according to Claim 8, **characterized in that** the substantially peripherally closed tubular seal (63) for the liftgate (2, 21, 22) is arranged on the vehicle body on a substantially peripherally closed flange (64).

10. Liftgate according to one of the preceding claims, **characterized in that**, in the region of the lateral and rear luggage compartment flap joint (46, 47), the separate sealing arrangement (61) for the liftgate (2, 21, 22) is arranged substantially below the separate sealing arrangement (62) for the lower liftgate section (4, 44) designed as the luggage compartment flap (4, 45) in such a manner that only one visible joint is produced.

11. Liftgate according to Claim 10, **characterized in that**, in the region of the lateral and rear luggage compartment flap joint (46, 47), the frame (5) of the liftgate (2, 21, 22) is designed in such a manner that the water running there into said luggage compartment flap joint (46, 47) reliably runs off via said frame (5) into the rear lid joint (48) on the vehicle body.

12. Liftgate according to one of the preceding claims, **characterized in that** the lower liftgate section (4, 44) designed as the luggage compartment flap (4, 45) is mounted pivotably on the lateral struts (53) in hinge devices (9, 91).

13. Liftgate according to Claim 12, **characterized in that** the hinge devices (9, 91) are designed as a parallelogram linkage with four hinges.

14. Liftgate according to one of the preceding claims, **characterized in that** the lower liftgate section (4, 44) can be held in an open position on the lateral struts (53) by means of a respective damping support.

15. Liftgate according to Claims 12 and 14,
**characterized in that** the damping supports are attached to the hinge devices (9, 91).

16. Liftgate according to Claim 12, **characterized in that** the hinge device (91) is designed in such a manner that the lower liftgate section (44) can be pivoted into an open position approximately vertically above the closed position in the frame (5).

17. Liftgate according to one of the preceding claims, **characterized in that** the lower liftgate section (4, 44) has a device (42) for locking said liftgate section to the lower strut (52).

18. Liftgate according to Claim 12, **characterized in that**, in the region between the fixedly attached pivot (7) and the hinge devices (9, 91), a further damping support is arranged between the vehicle body (1, 11, 12) and the frame (5, 53) in order to support the weight of the frame (5) in an open position of the liftgate.

19. Liftgate according to one of the preceding claims, **characterized in that** the upper liftgate section (32) is designed as a rear window which can be lowered into the lower liftgate section (45) into an open position.

## Revendications

1. Hayon arrière (2, 21, 22) pour un véhicule, qui peut pivoter autour d'un axe supérieur (7) monté fixement sur la carrosserie du véhicule et qui présente une partie de hayon supérieure (3, 32) et une partie de hayon inférieure (4, 44), dont au moins une partie de hayon (3, 32, 4, 44) peut être ouverte dans l'ensemble indépendamment de l'autre partie de hayon (3, 32, 4, 44) ou du hayon arrière (2, 21, 22), le hayon arrière (2, 21, 22) présentant un cadre (5) recevant de manière hermétique les parties de hayon (3, 32, 4, 44), avec des montants supérieur, inférieur et latéral (51 - 53), le montant supérieur (51) étant connecté à l'axe (7) monté fixement et pouvant pivoter autour de celui-ci dans une position ouverte du cadre (5) et le montant inférieur (52) présentant un dispositif (8) pour verrouiller le hayon arrière (2, 21, 22) sur la carrosserie (1, 11, 12), **caractérisé en ce que** le hayon arrière (2, 21, 22) et au moins une partie de hayon (32, 4, 44) comprennent à chaque fois un agencement d'étanchéité séparé (61, 62), qui est réalisé indépendamment par rapport à l'au moins un autre agencement d'étanchéité.

2. Hayon arrière selon la revendication 1,
**caractérisé en ce qu'**entre la carrosserie (1) et le cadre (5), les agencements d'étanchéité (61, 62) sont configurés ou disposés de telle sorte qu'ils repoussent l'eau (W) lorsque le hayon arrière est fermé.

3. Hayon arrière selon l'une quelconque des revendications précédentes, **caractérisé en ce que** le cadre (5) est configuré sous forme de rigole pour évacuer l'eau de pluie incidente (W) dans la région du hayon arrière (2, 3, 4) vers l'arrière du véhicule.

4. Hayon arrière selon l'une quelconque des revendications précédentes, **caractérisé en ce que** la partie de hayon inférieure (4, 44) forme un volet de coffre (4, 45).

5. Hayon arrière selon la revendication 4,
**caractérisé en ce que** le hayon arrière (2, 21, 22) et la partie de hayon inférieure (4, 44) réalisée sous forme de volet de coffre (4, 45) comprennent à chaque fois un agencement d'étanchéité séparé (61, 62), qui est réalisé indépendamment par rapport à l'autre agencement d'étanchéité correspondant.

6. Hayon arrière selon la revendication 5,
**caractérisé en ce que** l'agencement d'étanchéité séparé (62) pour la partie de hayon inférieure (4, 44) réalisée sous forme de volet de coffre (4, 45) comprend un joint d'étanchéité (65) tubulaire fermé substantiellement sur son pourtour.

7. Hayon arrière selon la revendication 6,
**caractérisé en ce que** le joint d'étanchéité (65) substantiellement fermé sur son pourtour, pour la partie de hayon inférieure (4, 44) réalisée sous forme de volet de coffre (4, 45), est disposé essentiellement sans vide sur une bride formant bourrelet (66) saillante et fermée.

8. Hayon arrière selon l'une quelconque des revendications précédentes, **caractérisé en ce que** l'agencement d'étanchéité séparé (61) pour le hayon arrière (2, 21, 22) comprend un joint d'étanchéité tubulaire (63) fermé substantiellement sur son pourtour.

9. Hayon arrière selon la revendication 8,
**caractérisé en ce que** le joint d'étanchéité tubulaire (63) fermé substantiellement sur son pourtour, pour le hayon arrière (2, 21, 22), est disposé du côté de la carrosserie sur une bride (64) essentiellement fermée sur son pourtour.

10. Hayon arrière selon l'une quelconque des revendications précédentes, **caractérisé en ce que** dans la région des joints du volet de coffre (46, 47) latéraux et arrière, l'agencement de joint d'étanchéité séparé (61) pour le hayon arrière (2, 21, 22) est disposé substantiellement en dessous de l'agencement d'étanchéité séparé (62) pour la partie de hayon inférieure (4, 44) réalisée sous forme de volet de coffre (4, 45), de telle sorte que seulement un joint visible subsiste.

11. Hayon arrière selon la revendication 10,
**caractérisé en ce que** dans la région des joints de volet de coffre latéraux et arrière (46, 47), le cadre (5) du hayon arrière (2, 21, 22) est configuré de telle sorte que l'eau s'écoulant à cet endroit dans ce joint de volet de coffre (46, 47) s'écoule de manière sûre sur ce cadre (5) dans le joint de couvercle arrière (48) du côté de la carrosserie.

12. Hayon arrière selon l'une quelconque des revendications précédentes, **caractérisé en ce que** la partie de hayon inférieure (4, 44) réalisée sous forme de volet de coffre (4, 45) est montée de manière pivotante sur les montants latéraux (53) dans des dispositifs d'articulation (9, 91).

13. Hayon arrière selon la revendication 12,
**caractérisé en ce que** les dispositifs d'articulation (9, 91) sont réalisés sous forme de parallélogrammes articulés avec quatre articulations.

14. Hayon arrière selon l'une quelconque des revendications précédentes, **caractérisé en ce que** la partie de hayon inférieure (4, 44) peut être maintenue dans une position ouverte par un support d'amortisseur respectif sur les montants latéraux (53).

15. Hayon arrière selon les revendications 12 et 14, **caractérisé en ce que** les supports d'amortisseurs sont montés sur les dispositifs d'articulation (9, 91).

16. Hayon arrière selon la revendication 12,
**caractérisé en ce que** le dispositif d'articulation (91) est réalisé de telle sorte que la partie de hayon inférieure (44) puisse pivoter dans une position ouverte approximativement verticalement au-dessus de la position fermée dans le cadre (5).

17. Hayon arrière selon l'une quelconque des revendications précédentes, **caractérisé en ce que** la partie de hayon inférieure (4, 44) présente un dispositif (42) pour verrouiller cette partie de hayon sur le montant inférieur (52).

18. Hayon arrière selon la revendication 12,
**caractérisé en ce que** dans la région entre l'axe monté fixement (7) et les dispositifs d'articulation (9, 91) entre la carrosserie (1, 11, 12) et le cadre (5, 53) est disposé un support d'amortissement supplémentaire pour le support du poids du cadre (5) dans une position ouverte du hayon arrière.

19. Hayon arrière selon l'une quelconque des revendications précédentes, **caractérisé en ce que** la partie de hayon supérieure (32) est configurée sous forme de fenêtre arrière, qui peut être enfoncée dans une position ouverte dans la partie de hayon inférieure (45).
